# NEUE EUROPÄISCHE PATENTSCHRIFT

(11) **EP 3 188 919 B2**
(45) Veröffentlichungstag und Bekanntmachung des Hinweises auf die Entscheidung über den Einspruch: **10.05.2023**
(45) Hinweis auf die Patenterteilung: 30.10.2019
(21) Anmeldenummer: 15763250.6
(22) Anmeldetag: 01.09.2015
(51) Int. Cl.: B60J 10/00

(54) **TÜRDICHTUNGSVORRICHTUNG, TÜRDICHTUNGSSYSTEM UND TÜRFLÜGEL FÜR EIN SCHIENENFAHRZEUG**
DOOR SEALING DEVICE, DOOR SEALING SYSTEM, AND DOOR LEAF FOR A RAIL VEHICLE
DISPOSITIF D'ÉTANCHÉITÉ POUR PORTE, SYSTÈME D'ÉTANCHÉITÉ POUR PORTE ET BATTANT DE PORTE POUR VÉHICULE FERROVIAIRE

(30) Priorität: 02.09.2014 DE 202014104110 U
(43) Veröffentlichungstag der Anmeldung: 12.07.2017
(73) Patentinhaber: Knorr-Bremse Gesellschaft mit beschränkter Haftung, 2340 Mödling (AT)
(72) Erfinder: HIRTENLEHNER, Thomas, A-3361 Aschbach (AT); JETZINGER, Peter, A-4470 Enns (AT)
(74) Vertreter: Aurigium Leischner & Luthe
(86) Internationale Anmeldenummer: PCT/EP2015/069962
(87) Internationale Veröffentlichungsnummer: WO 2016/034589

(56) Entgegenhaltungen:
- WO-A1-2007/147570
- CN-U- 203 305 823
- DE-U1- 20 316 762
- DE-U1-202008 002 914
- JP-U- H01 144 148
- US-A1- 2006 108 747

## Beschreibung

Die vorliegende Erfindung bezieht sich auf eine Türdichtungsvorrichtung, auf ein Türdichtungssystem und auf einen Türflügel für ein Schienenfahrzeug.

Im Schienenfahrzeugbereich werden als Abdichtung von Türflügeln zur Wagonaußenhaut oftmals Lippendichtungen mit beschränktem Hub (z.B. 3 mm) eingesetzt. Weiters haben die bestehenden Dichtungen die Eigenschaft einen nahezu linearen Kraftanstieg bei Erhöhung des Dichtungshubs zu haben. Vereinzelt kommen auch aktive Dichtungen im Schienenfahrzeugbereich vor, welche durch einen zusätzlichen Aktuator betätigt werden müssen (z.B. aufblasen der Dichtungen bei geschlossener Tür).

Die US 2006/0108747 A1 offenbart eine Türdichtungsvorrichtung zum Abdichten eines Spalts zwischen einem Türflügel und einem Rahmen für ein Schienenfahrzeug. Die Türdichtungsvorrichtung weist im entspannten Zustand einen runden Querschnitt auf, der durch Längsausnehmungen an der Innenseite verstärkt wird.

Die WO 2007/147570 A1 offenbart eine Fahrzeugtür mit einer Karosserie und einer Türverkleidung, wobei die Fahrzeugtür einen Dichtungsbereich zwischen der Karosserie und der Türverkleidung aufweist. Ein dabei verwendetes Dichtprofil weist Knicklinien und eine Kraft-Hub-Kennlinie auf, die am Anfang schnell ansteigt, und dann langsamer linear ansteigt.

Die CN 203 305 823 U offenbart eine Dichtung mit Knicklinien.

Es ist die Aufgabe der vorliegenden Erfindung eine verbesserte Türdichtungsvorrichtung, ein verbessertes Türdichtungssystem und einen verbesserten Türflügel für ein Schienenfahrzeug zu schaffen.

Diese Aufgabe wird durch eine Türdichtungsvorrichtung, ein Türdichtungssystem und einen Türflügel für ein Schienenfahrzeug gemäß den Hauptansprüchen gelöst.

Eine Hohlkammer mit knickbaren Seitenwänden kann vorteilhaft für eine Dichtung für einen Türflügel für ein Schienenfahrzeug eingesetzt werden. Unter Verwendung einer solchen Hohlkammer kann unter anderem einen hohe Druckdichtheit und hohe Wasserdichtheit des Einstiegssystems eines Schienenfahrzeugs erreicht werden.

Eine Türdichtungsvorrichtung zum Abdichten eines Spalts zwischen einem Türflügel und einem Rahmen für ein Schienenfahrzeug weist eine flexible schlauchförmige Hohlkammer auf, die durch zwei einander gegenüberliegende Kontaktwände und zwei einander gegenüberliegende Seitenwände ausgeformt wird. Im montierten Zustand der Türdichtungsvorrichtung ist eine erste der Kontaktwände dem Türflügel und eine zweite der Kontaktwände dem Rahmen zugewandt, sodass die Hohlkammer bei einer Schließbewegung des Türflügels eine Pressung erfährt, durch die die Kontaktwände aufeinander zu bewegt werden. Die Seitenwände sind ausgeformt, um ansprechend auf die Pressung entlang vorbestimmter Knicklinien geknickt zu werden.

Unter der Pressung kann verstanden werden, dass die Hohlkammer im montierten Zustand durch eine Annäherung zwischen Türflügel und Rahmen, zum Ende der Schließbewegung hin, zusammengedrückt wird. Durch das Ausknicken der Seitenwände während der Pressung können die Seitenwände, insbesondere im Bereich der Knicklinien voneinander wegbewegt werden. Dadurch können die Kontaktwände aufeinander zu bewegt werden. Ein Ausmaß einer Annäherungsbewegung der Kontaktwände zwischen einem Beginn und einem Ende der Pressung kann als ein Dichtungshub der Türdichtungsvorrichtung bezeichnet werden. Die Knicklinien können sich parallel zu einer Längserstreckungsrichtung der Hohlkammer erstrecken. Beispielsweise können die Knicklinien vordefinierte Schwachstellen in den Seitenwänden darstellen, an denen die Seitenwände bei einer durch die Pressung hervorgerufene Belastung abknicken. Beispielsweise können die Seitenwände im Bereich der Schwachstellen eine reduzierte Wandstärke oder ein anderes Material, beispielsweise ein biegsameres Material aufweisen.

Je nach Ausführungsform können die Seitenwände ausgeformt sein, um ansprechend auf die Pressung entlang vorbestimmter Knicklinien ausgeknickt oder eingeknickt zu werden. Durch ein Ausknicken kann eine Berührung der Seitenwände beim Einknicken sicher verhindert werden.

Gemäß einer Ausführungsform können die Innenseiten der Seitenwände entlang der vorbestimmten Knicklinien verlaufende linienförmige Ausnehmung aufweisen. Die Ausnehmungen können ausgeformt sein, um ein Ausknicken der Seitenwände ansprechend auf die Pressung zu bewirken. Solche Ausnehmungen, die beispielsweise die Form von Einkerbungen oder Nuten aufweisen können, können einfach realisiert werden.

Eine erste Seitenwand der Seitenwände weist eine erste vorbestimmte Knicklinie und eine zweite Seitenwand der Seitenwände weist eine zweite vorbestimmte Knicklinie auf Die Knicklinien können im entspannten Zustand der Hohlkammer mittig zwischen den Kontaktwänden verlaufen. Auf diese Weise können durch die Pressung hervorgerufene Materialbelastungen gut verteilt werden.

Die Hohlkammer ist ausgeformt, um bei der Pressung einen Dichtungshub von mindestens 8mm bereitzustellen. Durch einen relativ großen Dichtungshub kann eine hohe Dichtwirkung erzielt werden.

Beispielsweise kann die Hohlkammer ausgeformt sein, um bei der Pressung einen Dichtungshub bereitzustellen, der mindestens einem Viertel oder mindestens einem Drittel des Abstands zwischen den Kontaktwänden im entspannten Zustand der Hohlkammer entspricht. Dadurch kann die Türdichtungsvorrichtung mit einem geringen Bauraum auskommen und größere Einbautoleranzen des Einstiegssystems aufnehmen.

Gemäß der Erfindung weist die Hohlkammer eine Kraft-Hub-Kennlinie bezüglich einer die Pressung bewirkenden Presskraft und einem durch die Presskraft bewirkten Dichtungshub mit einem degressiven Verlauf auf. Somit kann, ausgehend von einem entspannten Zustand der Hohlkammer, eine Erhöhung der Presskraft um einen bestimmten Kraftbetrag eine geringere Änderung des Dichtungshubs bewirken als ausgehend von einem bereits etwas zusammengepressten Zustand der Hohlkammer. Auf diese Weise kann sehr schnell eine große Anpresskraft zwischen den Kontaktwänden der Hohlkammer und Oberflächen des Türflügels und des Rahmens geschaffen werden, sodass bereits bei einem geringen Dichtungshub eine hohe Dichtwirkung erreicht werden kann.

Gemäß einer Ausführungsform kann die Hohlkammer ausgeformt sein, um einen von den Kontaktwänden und Seitenwänden umschlossenen Hohlraum zu vergrößern, wenn die Kontaktwände ausgehend von einem entspannten Zustand des Hohlraums bis zu einem ersten Dichtungshub einander angenähert werden. Ferner kann die Hohlkammer ausgeformt sein, um den Hohlraum zu verkleinern, wenn die Kontaktwände über den ersten Dichtungshub hinaus einander angenähert werden. Auf diese Weise kann ein erforderlicher Druckausgleich zwischen einem Innenraum der Hohlkammer und einem Umfeld der Hohlkammer gering gehalten werden. Zum Druckausgleich kann zumindest eine Durchgangsöffnung in einer Wand, beispielsweise einer Seitenwand der Hohlkammer vorgesehen sein.

Eine Außenseite der ersten Kontaktwand kann eine Mehrzahl von Kontaktrippen aufweisen. Bei der ersten Kontaktwand kann es sich um diejenige Kontaktwand handeln, die dem Rahmen zugewandt ist, wenn die Türdichtungsvorrichtung an dem Türflügel befestigt wird, bzw. um diejenige Kontaktwand handeln, die dem Türflügel zugewandt ist, wenn die Türdichtungsvorrichtung an dem Rahmen befestigt wird. Durch die Kontaktrippen kann eine hohe Dichtwirkung erreicht werden.

Die Türdichtungsvorrichtung weist ein Verbindungselement zum Verbinden der Türdichtungsvorrichtung mit dem Türflügel oder dem Rahmen auf. Das Verbindungselement ist mit der Hohlkammer verbunden. Beispielsweise kann das Verbindungselement verwendet werden, um die Türdichtungsvorrichtung über eine kraft-, form- oder stoffschlüssige Verbindung mit dem Türflügel bzw. dem Rahmen zu verbinden.

Das Verbindungselement weist einen Steg auf, der entlang einer, eine erste Kontaktwand der Kontaktwände mit einer ersten Seitenwand der Seitenwände verbindenden Außenkante der Hohlkammer mit der Hohlkammer verbunden ist. Durch eine solche Anbindung wird eine mögliche Verformung der Hohlkammer während der Pressung nicht behindert.

Das Verbindungselement weist eine längliche Verdickung zum Herstellen einer formschlüssigen Verbindung zu einem Verbindungselement des Türflügels oder des Rahmens auf. Dabei sind die Hohlkammer und die längliche Verdickung längs nebeneinander angeordnet und über einen Steg miteinander verbunden. Beispielsweise kann die Verdickung in eine entsprechende Aufnahme des Türflügels oder des Rahmens eingeführt werden, um die Türdichtungsvorrichtung über die Verdickung und die Aufnahme mit dem Türflügel oder dem Rahmen zu verbinden.

Beispielsweise kann die längliche Verdickung als eine weitere Hohlkammer ausgeführt sein. An der Außenseite der weiteren Hohlkammer können Befestigungsrippen angeordnet sein. Durch die Ausführung der Verdickung als Hohlkammer kann die Verdickung beispielsweise in eine Aufnahme zur Befestigung der Türdichtungsvorrichtung an dem Rahmen oder dem Türflügel eingepresst werden. Durch die Befestigungsrippen kann eine Haltekraft zwischen der Verdickung und einer solchen Aufnahme weiter erhöht werden.

Die Türdichtungsvorrichtung kann einstückig aus einem elastischen Material hergestellt sein. Bei dem Material kann es sich beispielsweise um ein Elastomere handeln. Die Türdichtungsvorrichtung kann einen Abschnitt eines Endlosprofils darstellen. Durch die einstückige Ausführung lässt sich die Türdichtungsvorrichtung kostengünstig herstellen.

Gemäß der Erfindung weist die Hohlkammer einen Knick auf. Auf diese Weise kann die Türdichtungsvorrichtung verwendet werden, um eine Ecke des Türflügels abzudichten. Die Seitenwand, die an der Innenseite des Knicks angeordnet ist, weist im Bereich des Knicks eine Durchgangsöffnung auf. Eine solche Durchgangsöffnung kann verwendet werden, um Luft in oder aus der Hohlkammer herausströmen zu lassen.

Zusätzlich oder alternativ weist die Hohlkammer einen bogenförmigen Abschnitt oder einen Radius auf. Die Seitenwand, die an der Innenseite des bogenförmigen Abschnitts oder des Radius angeordnet ist, weist im Bereich des bogenförmigen Abschnitts oder des Radius eine Durchgangsöffnung auf. Ein Türdichtungssystem zum Abdichten eines Spalts zwischen einem Türflügel und einem Rahmen für ein Schienenfahrzeug kann zumindest zwei der genannten Türdichtungsvorrichtungen aufweisen, wobei aneinandergrenzende Enden der Hohlkammern der Türdichtungsvorrichtungen verbunden sein können. Somit kann beispielsweise eine geradlinige Türdichtungsvorrichtung mit einer einen Knick aufweisenden Türdichtungsvorrichtung verbunden werden. Die Enden können beispielsweise stoffschlüssig miteinander verbunden werden.

Ein Türflügel für ein Schienenfahrzeug weist entlang zumindest einem Rand des Türflügels einen Überlappungsbereich zur Überlappung mit einem Rahmen des Schienenfahrzeugs auf. Der Türflügel weist gemäß einer Ausführungsform zumindest eine genannte Türdichtungsvorrichtung auf, deren schlauchförmige Hohlkammer entlang des Überlappungsbereichs angeordnet ist. Entsprechen kann der Türflügel zumindest ein genanntes Türdichtungssystem aufweisen, wobei die schlauchförmigen Hohlkammern des Türdichtungssystems entlang des Überlappungsbereichs angeordnet sind. Auf diese Weise kann ein Türflügel mit einer Abdichtung realisiert werden, die im geschlossenen Zustand des Türflügels eine Druckdichtheit und Wasserdichtheit gewährleisten kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung eines Schienenfahrzeugs gemäß einem Ausführungsbeispiel der vorliegenden Erfindung;
- Fig. 2: eine dreidimensionale Darstellung einer Türdichtungsvorrichtung gemäß einem Ausführungsbeispiel der vorliegenden Erfindung;
- Fig. 3: eine Querschnittsdarstellung einer Türdichtungsvorrichtung gemäß einem Ausführungsbeispiel der vorliegenden Erfindung;
- Fig. 4: eine Darstellung einer Türdichtungsvorrichtung im montierten Zustand gemäß einem Ausführungsbeispiel der vorliegenden Erfindung;
- Fig. 5: eine Darstellung einer Pressung einer montierten Türdichtungsvorrichtung gemäß einem Ausführungsbeispiel der vorliegenden Erfindung;
- Fig. 6: eine Darstellung eines Dichtkraftverlaufs einer Türdichtungsvorrichtung gemäß einem Ausführungsbeispiel der vorliegenden Erfindung; und
- Fig. 7: eine dreidimensionale Darstellung einer Türdichtungsvorrichtung gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

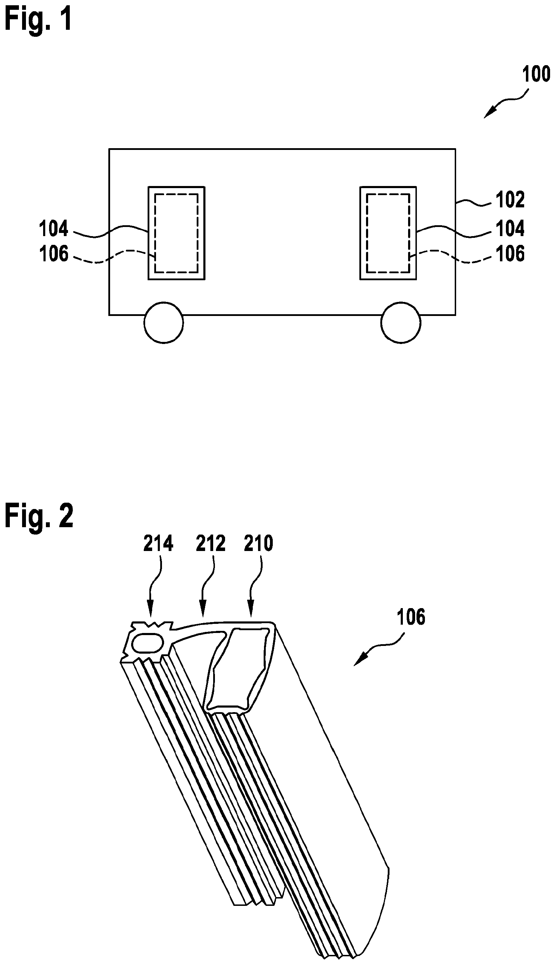

Fig. 1 zeigt eine schematische Darstellung eines Schienenfahrzeugs 100 gemäß einem Ausführungsbeispiel der vorliegenden Erfindung. Das Schienenfahrzeug 100 weist einen Rahmen 102 und beispielhaft zwei Türen mit je einem Türflügel 104 auf. Jeder der Türflügel 104 weist eine Türdichtungsvorrichtung 106 auf, die in Fig. 1 aufgrund ihrer Positionen an den Innenseiten der Türflügel 104 nur gestrichelt angedeutet sind. Die Türdichtungsvorrichtungen 106 sind ausgebildet, um einen sich bei geschlossenen Türen zwischen den Türflügeln 104 und dem Rahmen 102 befindlichen Spalt abzudichten. Dazu sind die Türdichtungsvorrichtungen 106 entlang einem im geschlossenen Zustand der Türen bestehenden Überlappungsbereich zwischen Türflügeln 104 und Rahmen 102 angeordnet. Die Türdichtungsvorrichtungen 106 können entlang einer oder mehrerer Kanten der Türflügel 104 geführt sein. In Fig. 1 sind die Türdichtungsvorrichtungen 106 lediglich beispielhaft umlaufend, entlang der Oberkanten, der Unterkanten und der Seitenkanten der Türflügel 104 angeordnet.

Alternativ können die Türdichtungsvorrichtung 106 auch an dem Rahmen 102 angeordnet sein.

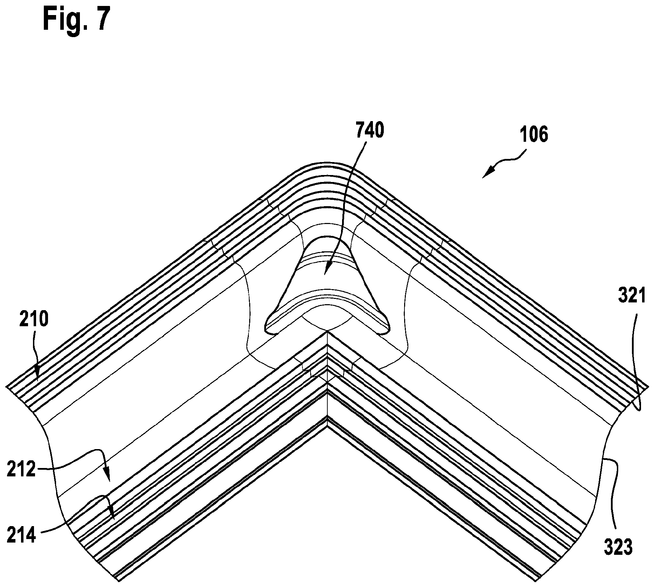

Wenn die Türdichtungsvorrichtungen 106 aus mehreren Einzelabschnitten zusammengesetzt sind, beispielsweise aus geradlinigen Abschnitten, wie in Fig. 2 gezeigt, und Eckabschnitten, wie in Fig. 7 gezeigt, können die Türdichtungsvorrichtungen 106 auch als Türdichtungssysteme bezeichnet werden.

Fig. 2 zeigt eine dreidimensionale Darstellung einer Türdichtungsvorrichtung 106 gemäß einem Ausführungsbeispiel der vorliegenden Erfindung. Dabei kann es sich um einen Abschnitt der anhand von Fig. 1 beschriebene Türdichtungsvorrichtung handeln. Die Türdichtungsvorrichtung 106 ist in Form eines Dichtungsprofils ausgeführt.

Die Türdichtungsvorrichtung 106 weist eine Hohlkammer 210 auf. Die Hohlkammer 210 ist schlauchförmig und flexibel ausgeführt und kann bei einer Anordnung zwischen einem Türflügel und einem Rahmen bei einer Schließbewegung des Türflügels zusammengepresst werden, um einen sich zwischen Türflügel und Rahmen befindlichen Spalt abzudichten. Eine Längserstreckungsrichtung der Hohlkammer 210 ist gemäß diesem Ausführungsbeispiel geradlinig, sodass die Hohlkammer 210 beispielsweise entlang einer geradlinigen Kante des Türflügels angeordnet werden kann.

Die Türdichtungsvorrichtung 106 weist ein Verbindungselement zum Verbinden der Türdichtungsvorrichtung mit dem Türflügel oder dem Rahmen auf. Gemäß diesem Ausführungsbeispiel weist das Verbindungselement einen Steg 212 und eine längliche Verdickung 214 auf. Die längliche Verdickung 214 verläuft parallel zu der Hohlkammer 210 und ist durchgängig über den Steg 212 mit der Hohlkammer 210 verbunden. Der Steg 210 verläuft somit durchgängig zwischen der länglichen Verdickung 214 und der Hohlkammer 210.

Die längliche Verdickung kann bei der Montage der Türdichtungsvorrichtung 106 verwendet werden, um eine formschlüssige Verbindung zwischen der Türdichtungsvorrichtung 106 und einem Verbindungselement des Türflügels oder des Rahmens herzustellen.

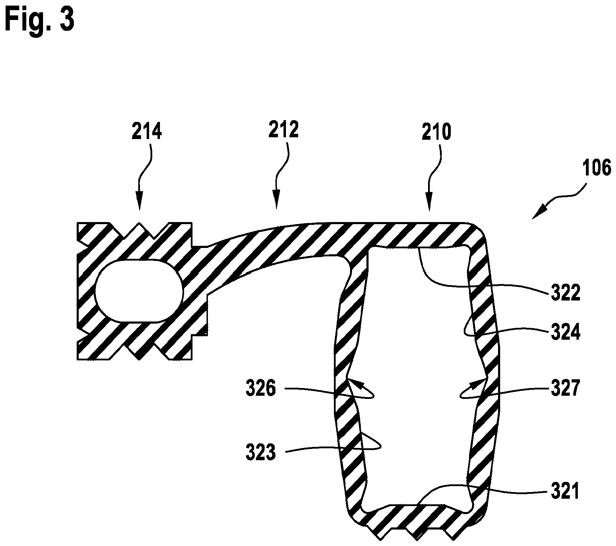

Fig. 3 zeigt eine Querschnittsdarstellung einer Türdichtungsvorrichtung 106 gemäß einem Ausführungsbeispiel der vorliegenden Erfindung. Dabei kann es sich um einen Dichtungsquerschnitt der in Fig. 2 gezeigten Türdichtungsvorrichtung 106 handeln.

Die schlauchförmige Hohlkammer 210 der Türdichtungsvorrichtung 106 weist eine erste Kontaktwand 321, eine zweite Kontaktwand 322, eine erste Seitenwand 323 und eine zweite Seitenwand 324 auf, durch die eine Innenraum der Hohlkammer 210 umschlossen wird. Im montierten Zustand der Türdichtungsvorrichtung 106 ist bei einer beispielhaften Montage der Türdichtungsvorrichtung 106 an dem Türflügel die erste Kontaktwand 321 dem Rahmen und die zweite Kontaktwand 322 dem Türflügel zugewandt. Bei einer Schließbewegung des Türflügels erfährt die Hohlkammer 210 eine Pressung, durch die die Kontaktwände 321, 322 aufeinander zu bewegt werden. Dabei werden die Seitenwände 323, 324 entlang vorbestimmter Knicklinien 326, 327 geknickt.

Gemäß unterschiedlicher Ausführungsbeispiele sind die Seitenwände 323, 324 spiegelbildlich oder nicht spiegelbildlich ausgeführt. Gemäß einem Ausführungsbeispiel, bei dem die Seitenwände 323, 324 nicht spiegelbildlich ausgeführt sind, ist die Form der Hohlkammer 210 und insbesondere die Form der Seitenwände 323, 324 in der Hinsicht optimiert, dass für Einfahrwinkel von 90° bis 35° ein degressiver Kraftverlauf vorliegt.

Gemäß diesem Ausführungsbeispiel verläuft eine erste Knicklinie 326 in etwa mittig zwischen den Kontaktflächen 321, 322 entlang der Innenseite der ersten Seitenfläche 323. Die erste Knicklinie 326 verläuft dabei parallel zu der Längserstreckungsrichtung der Hohlkammer 210. Eine zweite Knicklinie 327 verläuft in etwa mittig zwischen den Kontaktflächen 321, 322 entlang der Innenseite der zweiten Seitenwand 324. Die zweite Knicklinie 327 verläuft dabei parallel zu der Längserstreckungsrichtung der Hohlkammer 210 und somit parallel zu der ersten Knicklinie 326. Die Seitenwände 324, 324 weisen gemäß diesem Ausführungsbeispiel je zwei annähernd geradlinige Abschnitte auf, die an den Knicklinien 326, 327 leicht abgewinkelt aneinanderstoßen.

Gemäß diesem Ausführungsbeispiel sind die Seitenwände 323, 324 ausgeformt, um bei der Pressung der Hohlkammer 210 ausgeknickt zu werden, wodurch sich auf Höhe der Knicklinien 326, 327 befindliche Abschnitte der Seitenwände 323, 324 voneinander entfernen. Um das Ausknicken zu bewirken, weisen die Seitenwände 323, 324 entlang der Knicklinien 326, 327 verlaufende keilförmige Ausnehmungen, beispielsweise in Form von Einkerbungen oder Nuten auf.

An einer Außenseite der ersten Kontaktwand 321 sind eine Mehrzahl von Kontaktrippen, hier beispielhaft drei Kontaktrippen angeordnet. Die Kontaktrippen verlaufen längs der Längserstreckungsrichtung der Hohlkammer 210.

Gemäß diesem Ausführungsbeispiel ist der Steg 212 mit einer durch die erste Seitenwand 323 und die zweite Kontaktwand 322 gebildeten Außenkante der Hohlkammer 210 verbunden. Der Steg 212 bildet eine Art Verlängerung der zweiten Kontaktwand 322 und weist eine leichte Biegung auf.

Die längliche Verdickung 214 ist an einem der Hohlkammer 210 gegenüberliegenden Ende des Stegs 212 mit dem Steg 212 verbunden. Die längliche Verdickung 214 ist gemäß diesem Ausführungsbeispiel als eine weitere Hohlkammer ausgeführt. Alternativ kann die längliche Verdickung 214 auch massiv, ohne Hohlraum ausgeführt sein. An der Außenseite der länglichen Verdickung 214 sind Befestigungsrippen angeordnet, die parallel zu einer Längserstreckungsrichtung der länglichen Verdickung 214 verlaufen.

Gemäß diesem Ausführungsbeispiel ist eine Höhe der Seitenwände 323, 324 mehr als doppelt so groß wie eine Höhe der Kontaktwände, sodass ein Abstand der Kontaktwände 321, 322 zueinander mehr als doppelt so groß, wie ein Abstand der Seitenwände 323, 324 zueinander ist. Eine Breite des Steges 212 zwischen der länglichen Verdickung 214 und der Hohlkammer 210 ist etwas größer als die Höhe der zweiten Kontaktwand 322. Die längliche Verdickung 214 weist einen rechteckförmigen Außenumriss auf, wobei die Längen der Außenseiten der länglichen Verdickung in etwa der Höhe der zweiten Kontaktwand 322 entsprechen. In Fig. 3 nach oben zeigende Flächen der zweiten Kontaktwand 322 und der länglichen Verdickung 214 liegen in etwa auf gleicher Höhe.

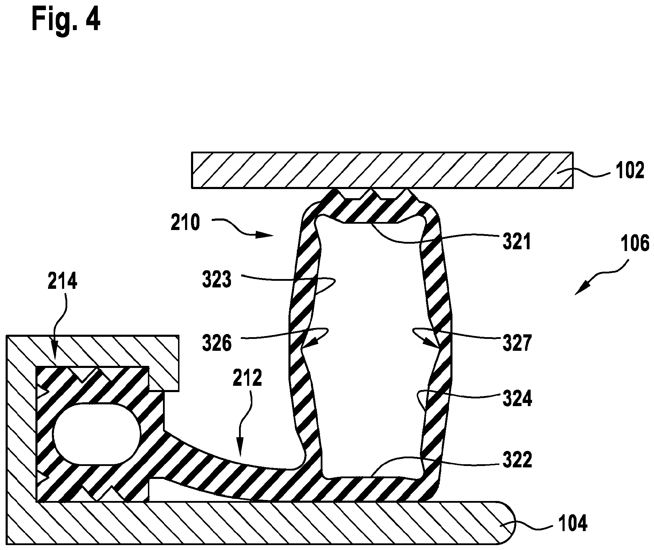

Fig. 4 zeigt eine Darstellung einer Türdichtungsvorrichtung 106 im montierten Zustand gemäß einem Ausführungsbeispiel der vorliegenden Erfindung. Dabei kann es sich um die anhand von Fig. 3 beschriebene Türdichtungsvorrichtung 106 handeln.

Gemäß diesem Ausführungsbeispiel ist die Türdichtungsvorrichtung 106 an einem Türflügel 104 befestigt. Dazu ist die längliche Verdickung 214 in ein Verbindungselement des Türflügels 104 eingeführt, wobei das Verbindungselement eine Art Nut ausformt. Zur Ausbildung einer formschlüssigen Verbindung zwischen dem Verbindungselement und der Verdickung 214 ist ein freies Ende des Verbindungselements mit einem zu dem Steg 212 hin zeigenden Anschlag ausgeführt. Die erste Kontaktwand 321 der Hohlkammer der Türdichtungsvorrichtung 106 liegt flächig an einer Oberfläche des Türflügels 104 an.

In Fig. 4 ist die Dichtung ungepresst gezeigt. Dabei entspricht ein Abstand zwischen dem Türflügel 104 und dem Rahmen 102 einer Höhe der Hohlkammer der Türdichtungsvorrichtung 106 im entspannten Zustand. Die Dichtungsrippen der zweiten Kontaktwand 322 berühren dabei eine Oberfläche des Rahmens 102. Die Kontaktwände 321, 322 sind zumindest annähernd parallel zueinander ausgerichtet. Die Seitenwände 324, 324 weisen in dem entspannten Zustand entlang der Knicklinien 326, 327 einen leichten Knick auf, sodass die Seitenwände 324, 324 einen leicht nach außen abgewinkelten oder konvexen Verlauf aufweisen.

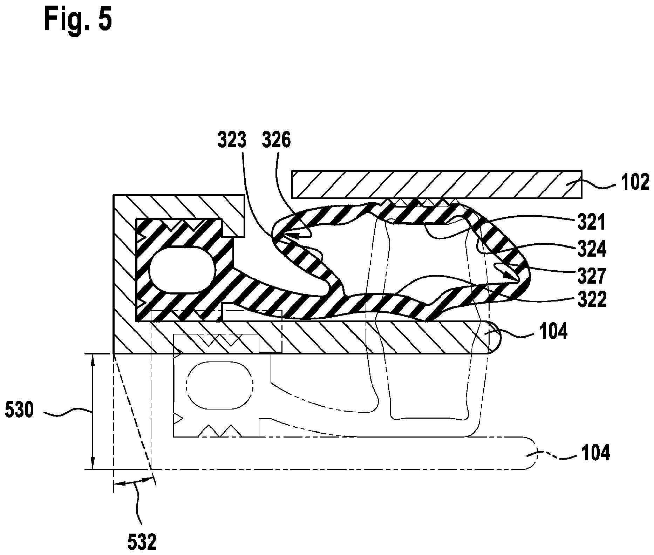

Fig. 5 zeigt eine Darstellung einer Pressung einer montierten Türdichtungsvorrichtung 106 gemäß einem Ausführungsbeispiel der vorliegenden Erfindung. Gezeigt ist die Türdichtungsvorrichtung 106 zum einen in dem in Fig. 4 gezeigten entspannten Zustand und zum anderen in einem gepressten Zustand, in dem die Hohlkammer aufgrund einer im Vergleich zu Fig. 4 fortgeschrittenen Annäherung zwischen dem Türflügel 104 und dem Rahmen 102 zusammengepresst ist, sodass die Dichtung gepresst ist. Aufgrund der Pressung sind die Seitenwände 323, 324 entlang der Knicklinien 326, 327 ausgeknickt. Die Seitenwände 324, 324 weisen dabei weiterhin je zwei annähernd geradlinige Abschnitte auf, die an den Knicklinien 326, 327 stark abgewinkelt aneinanderstoßen. Die Dichtungsrippen der zweiten Kontaktwand 322 sind im Kontakt mit dem Rahmen 102 und die erste Kontaktwand 321 liegt zumindest an den Rändern an dem Türflügel 104 an. Somit ist der Spalt zwischen Rahmen 102 und Türflügel 104 durch die Hohlkammer der Türdichtungsvorrichtung 106 abgedichtet.

Der Dichtungshub 530 der Hohlkammer der Türdichtungsvorrichtung 106 beträgt zwischen den in den Figuren 4 und 5 gezeigten Zuständen mindestens 8mm.

In Fig. 5 ist auch ein Einfahrwinkel 532 des Türflügels 104 dargestellt.

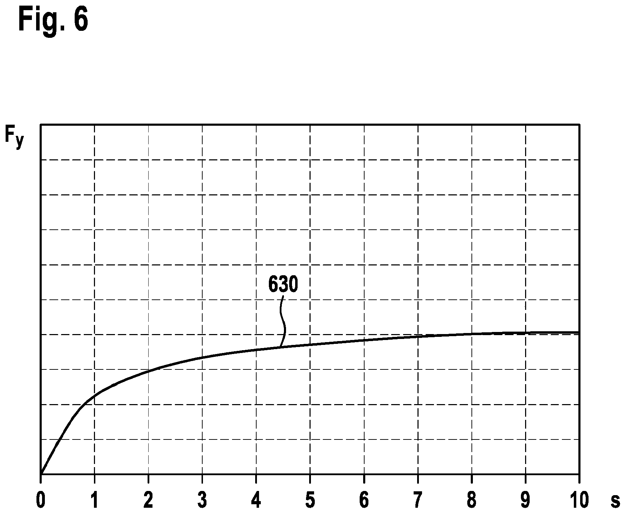

Fig. 6 zeigt eine Darstellung eines Dichtkraftverlaufs 630 einer Türdichtungsvorrichtung gemäß einem Ausführungsbeispiel der vorliegenden Erfindung. Dabei kann es sich beispielsweise um die in Fig. 5 gezeigte Türdichtungsvorrichtung handeln. Auf der Abszisse ist der Einschwenkweg s in Millimetern von 0 mm bis 10 mm und auf der Ordinate die Einschwenkkraft Fy in N/mm Profillänge aufgetragen. Dabei sind Kräfte Fy beim Einschwenken dargestellt.

Ein Einschwenkweg von 0mm kann dem in Fig. 4 gezeigten entspannten Zustand der Türdichtungsvorrichtung entsprechen. Ein Dichtungshub von 10 mm kann dem in Fig. 5 gezeigten gepressten Zustand der Türdichtungsvorrichtung entsprechen. Aus dem Dichtkraftverlauf 630, der als eine Kraft-Hub-Kennlinie aufgefasst werden kann, ist ersichtlich, dass die Einschwenkkraft zu Beginn der Einschwenkung, beispielsweise bei einem Dichtungshub zwischen 0 mm und 1 mm stark ansteigt und bei einer weiteren Einschwenkung nur noch gering ansteigt bzw, ab einem Einschwenkweg von 5 mm kaum noch ansteigt.

Fig. 7 zeigt eine dreidimensionale Darstellung einer Türdichtungsvorrichtung 106 der vorliegenden Erfindung. Die Türdichtungsvorrichtung 106 ist als ein Eckstück ausgeformt. Die Türdichtungsvorrichtung 106 weist in ihrer Längserstreckungsrichtung einen Knick auf. Die an den Knick anschließenden Schenkel der Türdichtungsvorrichtung 106 weisen je einen geradlinigen Verlauf auf, entsprechend der anhand von Fig. 2 beschriebenen Türdichtungsvorrichtung. Der Knick ist gemäß diesem Ausführungsbeispiel rechtwinklig ausgeführt, kann jedoch auch einen anderen Winkel und Radius für abgerundete Ecken aufweisen. Anstelle eines Knicks kann die Türdichtungsvorrichtung 106 somit auch einen bogenförmigen Abschnitt aufweisen.

Im Bereich des Knicks weist die zweite Seitenwand 323 der Hohlkammer 210 der Türdichtungsvorrichtung 106 eine Durchgangsöffnung 740 auf, über die ein Druckausgleich zwischen dem Innenraum der Hohlkammer 210 und der Außenumgebung stattfinden kann. Auf diese Weise kann eine Be- und Entlüftung einer mehrere Knicke oder Radien aufweisenden Türdichtungsvorrichtung über die Ecken erfolgen.

Anhand der vorangegangenen Figuren werden im folgenden Ausführungsbeispiele eines auf zumindest einer beschriebenen Türdichtungsvorrichtung 106 basierenden Türdichtungssystems detailliert beschrieben. Das Türdichtungssystem wird dabei beispielhaft anhand einer Abdichtung von Türflügeln 104 im Schienenfahrzeugbereich beschrieben.

Mit der Türdichtungsvorrichtung 106 kann ein Dichtungshub 530 von mindestens 10 mm zur Sicherstellung der Dichtheit gegen Druck und Wasser gewährleistet werden. Die Dichtheit kann dabei sowohl bei Portaltoleranzen und Einbautoleranzen am Fahrzeug 100 als auch bei dynamischen Beanspruchungen, beispielsweise aufgrund von Druckstößen bei Tunnelfahrten und Zugbegegnungen, gewährleistet werden, wodurch sich der Komfort für den Fahrgast erhöht.

Die Türdichtungsvorrichtung 106 stellt einen optimierten Kraftverlauf bei Dichtungspressung bereit. Dabei weist die Form der Kraftkurve 630 einen degressiven Verlauf auf. D.h. zu Beginn der Pressung steigt die Kraft relativ stark an und über den restlichen Hub ist diese Kraft annähernd konstant. Dies wird durch Ausknicken des Profils 210 erreicht. Die Druckdichtheit ist bereits nach geringem Dichtungshub gegeben. Bei maximalem Hub 530 wird die maximal zulässige Presskraft der Dichtung von beispielsweise 10N/100mm nicht überschritten.

Wie anhand von Fig. 7 gezeigt, erfolgt die Be- und Entlüftung der Hohlkammer 210 der Dichtung über die Ecken. Die Öffnung 740 zur Be- und Entlüftung dient einerseits auch dazu, dass die im Eck zusammenlaufenden Profile bei der Pressung nicht mit sich selbst kollidieren. Andererseits wird diese Öffnung 740 bei der Fertigung zur Entformung (Entkernung) genutzt.

Die Hohlkammer 210 weist eine geringe Volumenänderung während des relevanten Dichtungshubes auf. Daher fließt während der Dichtungspressung nur ein minimaler Volumenstrom durch die Öffnungen 740 in den Ecken.

Mit der beschriebenen Dichtungsform sind Einschwenkbewegungen ab 35° bis 90° und Fallungen im Türflügel bis 40° möglich, ohne den degressiven Verlauf der Kraft-Hub-Kennlinien 630 nennenswert zu beeinflussen.

Durch Rippen bzw. Rillen an der zweiten Kontaktwand 322 kann eine Reibminderung hervorgerufen werden. Kinematisch wird die Dichtung nicht unter 90° gepresst, da die Türen mit einem Winkel zwischen 35° und <90° einschwenken, wodurch es bei den Dichtungsprofilen oben und unten im Türflügel 104 zusätzlich zu einer Längsbewegung und somit einer Reibung zwischen Dichtung und Dichtrahmen 102 bei Kontakt kommt. Zur Reduzierung der anliegenden Fläche und dadurch auch zur Reduzierung der Reibkraft beinhaltet das Dichtungsprofil gemäß einem Ausführungsbeispiel Rillen.

Die beschriebene Türdichtungsvorrichtung ermöglicht ein vorteilhaftes Montagekonzept. Sämtliche Verbindungen im Dichtrahmen in sich sind ident ausgeführt (Verbindung Dichtprofil zu den Formteilen). Somit ist für die Verbindung, pro Dichtrahmen sind beispielsweise sechs Verbindungen notwendig, ausschließlich ein Werkzeug bzw. ein Prozess notwendig und der Dichtrahmen kann einfach nach Bedarf im Werk konfektioniert werden, beispielsweise unter Verwendung eines Endlos-Dichtungsprofils und entsprechender Formteile am Lager.

Der beschriebene Ansatz ermöglicht eine sehr gute Abdichtung der Türflügel 104 hinsichtlich Druck und Wasser. Dabei ist ein großer Dichtungshub 530 gegeben, um Portaltoleranzen und Einbautoleranzen zu kompensieren. Ferner ist ein degressiver Dichtkraftverlauf 630 gegeben, wobei die Druckdichtheit bereits nach geringem Dichtungshub besteht. Vorteilhafterweise tritt bei der Pressung ein optimierter Volumenstromfluss zur Be- und Entlüftung auf.

Gemäß einem Ausführungsbeispiel wird am Türflügel 104 oben, hinten und unten eine Türdichtungsvorrichtung 106 mit dem beispielsweise anhand von Fig. 3 gezeigten Profilquerschnitt verwendet. Vorne wird meist ein weiterer Profilquerschnitt verwendet, wobei nicht ausgeschlossen wird, dass auch vorne der in Fig. 3 gezeigte Profilquerschnitt verwendet wird.

Die Ecken, wie eine beispielsweise in Fig. 7 gezeigt ist, bestehen meist aus einem Formteil, wobei das abgelängte Endlosprofil, das beispielsweise für die an den in Fig. 7 gezeigten Knick anschließende Schenkel verwendet werden kann, gleich mit aufvulkanisiert werden kann. Ein komplettes Türdichtungssystem besteht üblicherweise aus dem Endlosprofilquerschnitt eventuell einem weiteren Endlosprofilquerschnitt und Eckteilen. Es soll aber nicht ausgeschlossen werden, dass die Endlosprofilquerschnitte auch ohne Eckteil miteinander verbunden werden bzw. in der Ecke verbunden sind.

Die beschriebenen Ausführungsbeispiele sind nur beispielhaft gewählt und können miteinander kombiniert werden.

### Bezugszeichenliste

- 100: Fahrzeug
- 102: Rahmen
- 104: Türflügel
- 106: Türdichtungsvorrichtung
- 210: Hohlkammer
- 212: Steg
- 214: längliche Verdickung
- 321: erste Kontaktfläche
- 322: zweite Kontaktfläche
- 323: erste Seitenwand
- 324: zweite Seitenwand
- 326: erste Knicklinie
- 327: zweite Knicklinie
- 530: Dichtungshub
- 532: Einfahrwinkel
- 630: Dicktkraftverlauf
- 740: Durchgangsöffnung

## Patentansprüche

1. Türdichtungsvorrichtung (106) zum Abdichten eines Spalts zwischen einem Türflügel (104) und einem Rahmen (102) für ein Schienenfahrzeug (100), wobei die Türdichtungsvorrichtung (106) eine flexible schlauchförmige Hohlkammer (210) aufweist, die durch zwei einander gegenüberliegende Kontaktwände (321, 322) und zwei einander gegenüberliegende Seitenwände (323, 324) ausgeformt wird,
wobei die Hohlkammer (210) eine als Knick oder Radius ausgeführte Ecke aufweist,
wobei im montierten Zustand der Türdichtungsvorrichtung (106) eine erste Kontaktwand (321) der Kontaktwände (321, 322) dem Türflügel (104) und eine zweite Kontaktwand (322) der Kontaktwände (321, 322) dem Rahmen (102) zugewandt ist, sodass die Hohlkammer (210) bei einer Schließbewegung des Türflügels (104) eine Pressung erfährt, durch die die Kontaktwände (321, 322) aufeinander zu bewegt werden,
wobei die Kontaktwände (321, 322) im ungepressten Zustand der Türdichtungsvorrichtung (106) zumindest annähernd parallel zueinander ausgerichtet sind,
wobei die Hohlkammer (210) ausgeformt ist, um bei der Pressung einen Dichtungshub (530) von mindestens 8 mm bereitzustellen,
wobei eine erste Seitenwand (323) der Seitenwände (323, 324) eine erste vorbestimmte Knicklinie (326) und eine zweite Seitenwand (324) der Seitenwände (323, 324) eine zweite vorbestimmte Knicklinie (327) aufweist, wobei die Seitenwände (323, 324) in dem ungepressten Zustand entlang der vorbestimmten Knicklinien (326, 327) einen leichten Knick aufweisen, sodass die Seitenwände (323, 324) einen leicht nach außen abgewinkelten oder konvexen Verlauf aufweisen,
wobei die Seitenwände (323, 324) ausgeformt sind, um ansprechend auf die Pressung entlang der vorbestimmten Knicklinien (326, 327) geknickt zu werden, wobei die Hohlkammer (210) eine Kraft-Hub-Kennlinie (630) bezüglich einer die Pressung bewirkenden Presskraft und den durch die Presskraft bewirkten Dichtungshub (530) mit einem degressiven Verlauf aufweist,
wobei die Seitenwand (323), die an der Innenseite des Knicks oder Radius angeordnet ist, im Bereich des Knicks oder Radius eine Durchgangsöffnung (740) aufweist, wobei die Be- und Entlüftung der Hohlkammer (210) über die Ecke erfolgt,
wobei ein Verbindungselement zum Verbinden der Türdichtungsvorrichtung (106) mit dem Türflügel (104) oder dem Rahmen (102) mit der Hohlkammer (210) verbunden ist,
wobei das Verbindungselement einen Steg (212) aufweist, der entlang einer, die erste Kontaktwand (321) mit der ersten Seitenwand (323) verbindenden Außenkante der Hohlkammer (210) mit der Hohlkammer (210) verbunden ist,
wobei das Verbindungselement eine längliche Verdickung (214) zum Herstellen einer formschlüssigen Verbindung zu einem Verbindungselement des Türflügels (104) oder des Rahmens (102) aufweist, wobei die Hohlkammer (210) und die längliche Verdickung (214) längs nebeneinander angeordnet und über den Steg (212) miteinander verbunden sind, und
wobei die längliche Verdickung (214) parallel zu der Hohlkammer (210) verläuft und durchgängig über den Steg (212) mit der Hohlkammer (210) verbunden ist, wodurch der Steg (210) durchgängig zwischen der länglichen Verdickung (214) und der Hohlkammer (210) verläuft.

2. Türdichtungsvorrichtung (106) gemäß Anspruch 1, **dadurch gekennzeichnet, dass** die Seitenwände (323, 324) ausgeformt sind, um ansprechend auf die Pressung entlang der vorbestimmten Knicklinien (326, 327) ausgeknickt zu werden.

3. Türdichtungsvorrichtung (106) gemäß Anspruch 2, **dadurch gekennzeichnet, dass** die Innenseiten der Seitenwände (323, 324) entlang der vorbestimmten Knicklinien (326, 327) verlaufende linienförmige Ausnehmungen aufweisen, die ausgeformt sind, um ein Ausknicken der Seitenwände (323, 324) ansprechend auf die Pressung zu bewirken.

4. Türdichtungsvorrichtung (106) gemäß einem der vorangegangenen Ansprüche, **dadurch gekennzeichnet, dass** eine erste Seitenwand (323) der Seitenwände (323, 324) eine erste vorbestimmte Knicklinie (326) und eine zweite Seitenwand (324) der Seitenwände (323, 324) eine zweite vorbestimmte Knicklinie (327) aufweist, und wobei die Knicklinien (326, 327) im entspannten Zustand der Hohlkammer (210) mittig zwischen den Kontaktwänden (321, 322) verlaufen.

5. Türdichtungsvorrichtung (106) gemäß einem der vorangegangenen Ansprüche, **dadurch gekennzeichnet, dass** die Hohlkammer (210) ausgeformt ist, um bei der Pressung den Dichtungshub (530) bereitzustellen, der mindestens einem Viertel des Abstands zwischen den Kontaktwänden (321, 322) im entspannten Zustand der Hohlkammer (210) entspricht.

6. Türdichtungsvorrichtung (106) gemäß einem der vorangegangenen Ansprüche, **dadurch gekennzeichnet, dass** die Hohlkammer (210) ausgeformt ist, um einen von den Kontaktwänden (321, 322) und Seitenwänden (323, 324) umschlossenen Hohlraum zu vergrößern, wenn die Kontaktwände (321, 322) ausgehend von einem entspannten Zustand der Hohlkammer (210) bis zu einem ersten Dichtungshub einander angenähert werden, und ausgeformt ist, um den Hohlraum zu verkleinern, wenn die Kontaktwände (321, 322) über den ersten Dichtungshub hinaus einander angenähert werden

7. Türdichtungsvorrichtung (106) gemäß einem der vorangegangenen Ansprüche, **dadurch gekennzeichnet, dass** eine Außenseite der ersten Kontaktwand (321) der Kontaktwände (321, 322) eine Mehrzahl von Kontaktrippen aufweist.

8. Türdichtungsvorrichtung (106) gemäß einem der vorangegangenen Ansprüche, **dadurch gekennzeichnet, dass** die längliche Verdickung (214) als eine weitere Hohlkammer ausgeführt ist, wobei an der Außenseite der weiteren Hohlkammer Befestigungsrippen angeordnet sind.

9. Türdichtungsvorrichtung (106) gemäß einem der vorangegangenen Ansprüche, **dadurch gekennzeichnet, dass** die Türdichtungsvorrichtung (106) einstückig aus einem elastischen Material hergestellt ist.

10. Türdichtungssystem zum Abdichten eines Spalts zwischen einem Türflügel (104) und einem Rahmen (102) für ein Schienenfahrzeug (100) **dadurch gekennzeichnet, dass** das Türdichtungssystem eine erste Türdichtungsvorrichtung (106) aufweist, die eine flexible schlauchförmige Hohlkammer (210) aufweist, die durch zwei einander gegenüberliegende Kontaktwände (321, 322) und zwei einander gegenüberliegende Seitenwände (323, 324) ausgeformt wird, wobei im montierten Zustand der Türdichtungsvorrichtung (106) eine erste Kontaktwand (321) der Kontaktwände (321, 322) dem Türflügel (104) und eine zweite Kontaktwand (322) der Kontaktwände (321, 322) dem Rahmen (102) zugewandt ist, sodass die Hohlkammer (210) bei einer Schließbewegung des Türflügels (104) eine Pressung erfährt, durch die die Kontaktwände (321, 322) aufeinander zu bewegt werden, wobei die Seitenwände (323, 324) ausgeformt sind, um ansprechend auf die Pressung entlang vorbestimmter Knicklinien (326, 327) geknickt zu werden, wobei die Hohlkammer (210) eine Kraft-Hub-Kennlinie (630) bezüglich einer die Pressung bewirkenden Presskraft und einem durch die Presskraft bewirkten Dichtungshub (530) mit einem degressiven Verlauf aufweist, und eine zweite Türdichtungsvorrichtung (106) gemäß einem der vorangegangenen Ansprüche aufweist, wobei ein Ende der Hohlkammer (210) der ersten Türdichtungsvorrichtung (106) mit einem Ende der Hohlkammer (210) der zweiten Türdichtungsvorrichtung (106) verbunden ist.

11. Türflügel (104) für ein Schienenfahrzeug (100), wobei der Türflügel (104) entlang zumindest einem Rand des Türflügels (104) einen Überlappungsbereich zur Überlappung mit einem Rahmen (102) des Schienenfahrzeugs (100) aufweist, **dadurch gekennzeichnet, dass** der Türflügel (104) zumindest eine Türdichtungsvorrichtung (106) gemäß einem der Ansprüche 1 bis 9 oder zumindest ein Türdichtungssystem gemäß Anspruch 10 aufweist, wobei die schlauchförmige Hohlkammer (210) der Türdichtungsvorrichtung (106) entlang des Überlappungsbereichs angeordnet ist oder die schlauchförmigen Hohlkammern (210) des Türdichtungssystems entlang des Überlappungsbereichs angeordnet sind.

## Claims

1. A door sealing device (106) for sealing a gap between a door leaf (104) and a frame (102) for a rail vehicle (100), the door sealing device (106) having a flexible, tubular hollow chamber (210) formed by two opposing contact walls (321, 322) and two opposing side walls (323, 324),
the hollow chamber (210) having a corner in the form of a bend or radius,
when the door sealing device (106) is fitted, a first contact wall (321) of contact walls (321, 322) facing the door leaf (104) and a second contact wall (322) of the contact walls (321, 322) facing the frame (102) so that during a closing movement of the door leaf (104) the hollow chamber (210) is compressed in such manner that the contact walls (321, 322) are moved towards one another,
when the door sealing device (106) is not compressed, the contact walls (321, 322) being oriented at least approximately parallel to one another,
the hollow chamber (210) being designed to provide a sealing movement (53) of at least 8mm during compression,
a first side wall (323) of the side walls (323, 324) having a first predetermined bending line (326) and a second side wall (324) of the side walls (323, 324) having a second predetermined bending line (327), when not compressed the side walls (323, 324) having a slight bend along the predetermined bending lines (326, 327) so that the side walls (323, 324) run angled slightly outwards or convexly,
the side walls (323, 324) being designed to be bent along the predetermined bending lines (326, 327) in response to the compression, the hollow chamber (210) having a force-movement characteristic curve (630) in relation to a compression force that produces the compression and the sealing movement (530) produced by the compression force, this force-movement characteristic curve (630) having a degressive course,
the side wall (323) arranged on the inside of the bend or radius having a through-hole (740) in the region of the bend or radius, the hollow chamber (210) being aerated and deaerated via the corner,
a connecting element for connecting the door sealing device (106) to the door leaf (104) or to the frame (102) being connected to the hollow chamber (210).
the connecting element having a web (212) that is connected to the hollow chamber (210) along an outer edge of the hollow chamber (210) that connects the first contact wall (321) to the second contact wall (323),
the connecting element having an elongated thicker portion (214) for producing an interference-fit connection to a connecting element of the door leaf (104) or of the frame (102), the hollow chamber (210) and the elongated thicker portion (214) being arranged longitudinally adjacent to one another and being connected to one another via the web (212), and
the elongated thicker portion (214) running parallel to the hollow chamber (210) and being connected continuously to the hollow chamber (210) by the web (212) so that the web (210) runs continuously between the elongated thicker portion (214) and the hollow chamber (210).

2. A door sealing device (106) according to claim 1, **characterised in that** the side walls (323, 324) are designed to be bent outwards along the predetermined bending lines (326, 327) in response to the compression.

3. A door sealing device (106) according to claim 2, **characterised in that** the insides of the side walls (323, 324) have linear recesses that extend along the predetermined bending lines (326, 327) and are designed to cause the side walls (323, 324) to bend in response to the compression.

4. A door sealing device (106) according to any one of the preceding claims, **characterised in that** a first side wall (323) of the side walls (323, 324) has a first predetermined bending line (326) and a second side wall (324) of the side walls (323, 324) has a second predetermined bending line (337), the bending lines (326, 327) extending centrally between the contact walls (321, 322) when the hollow chamber (210) is uncompressed.

5. A door sealing device (106) according to any one of the preceding claims, **characterised in that** the hollow chamber (210) is designed to provide the sealing movement during compression and that this sealing movement corresponds to at least one quarter of the distance between the contact walls (321, 322) when the hollow chamber (210) is uncompressed.

6. A door sealing device (106) according to any one of the preceding claims, **characterised in that** the hollow chamber (210) is designed to enlarge a hollow space enclosed by the contact walls (321, 322) and the side walls (323, 324) when the contact walls (321, 322) are brought closer together, starting from an uncompressed state of the hollow chamber (210) and as far as a first sealing movement, and is designed to reduce the hollow space when the contact walls (321, 322) are brought closer together by an amount greater than the first sealing movement.

7. A door sealing device (106) according to any one of the preceding claims, **characterised in that** an outside of the first contact wall (321) of the contact walls (321, 322) has a plurality of contact ribs.

8. A door sealing device (106) according to any one of the preceding claims, **characterised in that** the elongated thicker portion (214) takes the form of a further hollow chamber, fastening ribs being arranged on the outside of this further hollow chamber.

9. A door sealing device (106) according to any one of the preceding claims, **characterised in that** the door sealing device (106) is produced in one piece from an elastic material.

10. A door sealing system for sealing a gap between a door leaf (104) and a frame (102) for a rail vehicle (100), **characterised in that** the door sealing system has a first door sealing device (106) that has a flexible, tubular hollow chamber (210) formed by two opposing contact walls (321, 322) and two opposing side walls (323, 324), when the door sealing device (106) is fitted a first contact wall (321) of the contact walls (321, 322) facing the door leaf (104) and a second contact wall (322) of the contact walls (321, 322) facing the frame (102) so that during a closing movement of the door leaf (104) the hollow chamber (210) is compressed in such manner that the contact walls (321, 322) are moved towards one another, the side walls (323, 324) being designed to be bent along predetermined bending lines (326, 327) in response to the compression, the hollow chamber (210) having a force-movement characteristic curve (630) in relation to a compression force that produces the compression and a sealing movement (530) produced by the compression force, this force-movement characteristic curve (630) having a degressive course, and has a second door sealing device (106) according to any one of the preceding claims, an end of the hollow chamber (210) of the first door sealing device (106) being connected to an end of the hollow chamber (210) of the second door sealing device (106).

11. A door leaf (104) for a rail vehicle (100), the door leaf (104) having along at least one edge of the door leaf (104) an overlap region for overlapping with a frame (102) of the rail vehicle (100), **characterised in that** the door leaf (104) has at least one door sealing device (106) according to any one of claims 1 to 9 or at least one door sealing system according to claim 10, the tubular hollow chamber (210) of the door sealing device (106) being arranged along the overlap region or the tubular hollow chamber (210) of the door sealing system being arranged along the overlap region.

## Revendications

1. Dispositif (106) d'étanchéité de porte pour rendre étanche un interstice entre un battant (104) de porte et un cadre (102) pour un véhicule (100) ferroviaire, le dispositif (106) d'étanchéité de porte ayant une cavité (210) en forme de conduit souple, formée de deux parois (321, 322) de contact opposées l'une à l'autre et de deux parois (323, 324) latérales opposées l'une à l'autre,
la cavité (210) ayant un coin réalisé sous la forme d'un coude ou d'un rayon,
dans lequel, lorsque le dispositif (106) d'étanchéité de porte est à l'état monté, une première paroi (321) de contact des parois (321, 322) de contact est tournée vers le battant (104) de la porte et une deuxième paroi (322) de contact des parois (321, 322) de contact est tournée vers le cadre (102), de sorte que la cavité (210) subit, lors d'un mouvement de fermeture du battant (104) de la porte, une compression par laquelle les parois (321, 322) de contact sont déplacées l'une vers l'autre,
dans lequel les parois (321, 322) de contact sont, à l'état non comprimé du dispositif (106) d'étanchéité de porte, au moins à peu près parallèles entre elles,
dans lequel la cavité (210) est conformée pour donner à la compression une course (530) d'étanchéité d'au moins 8 mm, dans lequel une première paroi (323) latérale des parois (323, 324) latérales a un premier pli (326) défini à l'avance et une deuxième paroi (324) latérale des parois (323, 324) latérales à un deuxième pli (327) défini à l'avance, dans lequel les parois (323, 324) latérales ont, à l'état non comprimé, le long des plis (326, 327) déterminés à l'avance, un coude léger de manière à ce que les parois (323, 324) latérales et un tracé coudé légèrement vers l'extérieur ou convexe,
dans lequel les parois (323, 324) latérales sont déformées pour être pliées, conformément à la compression, suivant des plis (326, 327) déterminés à l'avance, la cavité (210) ayant une courbe caractéristique (630) force-course se rapportant à une force de pression provoquant la compression et à une course (530) d'étanchéité provoquée par la force de pression, ayant une courbe dégressive,
dans lequel la paroi (323) latérale, qui est disposée du côté intérieur du coude ou du rayon, a une ouverture (740) de passage dans la partie du coude ou du rayon, l'alimentation en air ou la purge d'air de la cavité (210) s'effectuant par le coin,
dans lequel un élément de liaison est relié à la cavité (210) pour la liaison du dispositif (106) d'étanchéité de porte au battant (104) de porte ou au cadre (102),
dans lequel l'élément de liaison a une entretoise (212), qui est reliée à la cavité (210) le long d'un bord extérieur de la cavité (210), reliant la première paroi (321) de contact à la première paroi (323) latérale,
dans lequel l'élément de liaison a un épaississement (214) oblong de production d'une liaison à complémentarité de forme avec un élément de liaison du battant (104) ou du cadre (102), dans lequel la cavité (210) et l'épaississement (214) oblong sont disposés en longueur l'un à côté de l'autre et sont reliés entre eux par l'entretoise (212) et
dans lequel l'épaississement (214) oblong s'étend parallèlement à la cavité (210) et est relié à la cavité (210) d'une manière continue par l'entretoise (212), l'entretoise (210) s'étendant en continu entre l'épaississement (214) oblong et la cavité (210).

2. Dispositif (106) d'étanchéité de porte suivant la revendication 1, **caractérisé en ce que** les parois (323, 324) latérales sont conformées pour être pliées vers l'extérieur, conformément à la compression, suivant les plis (326, 327) déterminés à l'avance.

3. Dispositif (106) d'étanchéité de porte suivant la revendication 2, **caractérisé en ce que** les côtés intérieurs des parois (323, 324) latérales ont des évidements linéaires, qui s'étendent suivant les plis (326, 327) déterminés à l'avance et qui sont conformés pour provoquer une courbure vers l'extérieur des parois (323, 324) latérales, conformément à la compression.

4. Dispositif (106) d'étanchéité de porte suivant l'une des revendications précédentes, **caractérisé en ce qu'**une première paroi (323) latérale des parois (323, 324) latérales a un premier pli (326) déterminé à l'avance et une deuxième paroi (324) latérale des parois (323, 324) latérales a un deuxième pli (327) déterminé à l'avance, les plis (326, 327) s'étendant, à l'état détendu de la cavité (210), au milieu entre les parois (321, 322) de contact.

5. Dispositif (106) d'étanchéité de porte suivant l'une des revendications précédentes, **caractérisé en ce que** la cavité (210) est conformée pour donner, lors de la compression, une course (530) d'étanchéité, qui correspond au moins à un quart de la distance entre les parois (321, 322) de contact, lorsque la cavité (210) est à l'état détendu.

6. Dispositif (106) d'étanchéité de porte suivant l'une des revendications précédentes, **caractérisé en ce que** la cavité (210) est conformée pour agrandir l'espace creux entouré des parois (321, 322) de contact et des parois (323, 324) latérales, lorsque les parois (321, 322) de contact se rapprochent l'une de l'autre, à partir d'un état détendu de la cavité (210) jusqu'à une première course d'étanchéité, et est conformée de manière à diminuer l'espace creux, si les parois (321, 322) de contact se rapprochent l'une de l'autre au-delà de la première course d'étanchéité.

7. Dispositif (106) d'étanchéité de porte suivant l'une des revendications précédentes, **caractérisé en ce qu'**un côté extérieur d'une première paroi (321) de contact des parois (321, 322) de contact a une pluralité de nervures de contact.

8. Dispositif (106) d'étanchéité de porte suivant l'une des revendications précédentes, **caractérisé en ce que** l'épaississement (214) oblong est réalisé sous la forme d'une autre cavité, des nervures de fixation étant disposées sur le côté extérieur de l'autre cavité.

9. Dispositif (106) d'étanchéité de porte suivant l'une des revendications précédentes, **caractérisé en ce que** le dispositif (106) d'étanchéité de porte est fabriqué d'une seule pièce en un matériau élastique.

10. Système d'étanchéité de porte pour rendre étanche un interstice entre un battant (104) de porte et un cadre (102) pour un véhicule (100) ferroviaire, **caractérisé en ce que** le système d'étanchéité de porte a un premier dispositif (106) d'étanchéité de porte, qui a une cavité (210) en forme de conduit souple, formée de deux parois (321, 322) de contact opposées l'une à l'autre et de deux parois (323, 324) latérales opposées l'une à l'autre, dans lequel, lorsque le dispositif (106) d'étanchéité de porte est à l'état monté, une première paroi (321) de contact des parois (321, 322) de contact est tournée vers le battant (104) de la porte et une deuxième paroi (322) de contact des parois (321, 322) de contact est coudée vers le cadre (102), de sorte que la cavité (210) subit, lors d'un mouvement de fermeture du battant (104) de la porte, une compression, par laquelle les parois (321, 322) de contact sont déplacées l'une vers l'autre, les parois (323, 324) latérales étant conformées pour être courbées, conformément à la compression, suivant des plis (326, 327) déterminés à l'avance, la cavité (210) ayant une courbe caractéristique (630) force-course se rapportant à une force de pression provoquant la compression et à une course (530) d'étanchéité provoquée par la force de pression ayant une courbe dégressive, et un deuxième dispositif (106) d'étanchéité de porte suivant l'une des revendications précédentes, dans lequel une extrémité de la cavité (210) du premier dispositif (106) d'étanchéité de porte est reliée à une extrémité de la cavité (210) du deuxième dispositif (106) d'étanchéité de porte.

11. Battant (104) de porte pour un véhicule (100) ferroviaire, le battant (104) de la porte ayant, le long d'au moins un bord du battant (104) de la porte, une partie de chevauchement pour le chevauchement avec un cadre (102) du véhicule (100) ferroviaire, **caractérisé en ce que** le battant (104) de la porte a au moins un dispositif (106) d'étanchéité de porte suivant l'une des revendications 1 à 9 ou au moins un système d'étanchéité de porte suivant la revendication 10, la cavité (210) en forme de conduit souple du dispositif (106) d'étanchéité de porte étant disposée le long de la partie de chevauchement ou les cavités (210) en forme de conduit souple du système d'étanchéité de porte étant disposées le long de la partie de chevauchement.
